# EUROPÄISCHE PATENTANMELDUNG

(11) **EP 1 929 906 A2**
(43) Veröffentlichungstag der Anmeldung: **11.06.2008**
(21) Anmeldenummer: 07121853.1
(22) Anmeldetag: 29.11.2007
(51) Int. Cl.: A47J 31/54, F24H 1/12

(54) **Einrichtung zum Erwärmen von Wasser**

(30) Priorität: 30.11.2006 DE 202006018217 U
(71) Anmelder: WIK Far East Ltd., North Point, Hong Kong (CN)
(72) Erfinder: Steckhan, Markus, 45481 Mülheim (DE)
(74) Vertreter: Haverkamp, Jens

(57) **Zusammenfassung**

Eine Einrichtung 1 zum Erwärmen von Wasser umfasst einen Wasserbehälter 2 zum Bevorraten des zu erwärmenden Wassers 3, eine Pumpe 6 zum Fördern des zu erwärmenden Wassers über eine Zuführleitung 5, einen Durchlauferhitzer 7 zum Erwärmen des geförderten Wassers und eine dem Durchlauferhitzer 7 nachgeschaltete Auslaufleitung 8. Die Einrichtung 1 weist einen Wärmeübertrager 11 zum Kühlen des vom den Durchlauferhitzer 7 erwärmten Wassers einerseits und zum Erwärmen des dem Durchlauferhitzer 7 zugeführten Wassers andererseits auf, dessen einer Fluidkanal in die dem Durchlauferhitzer 7 nachgeschaltete Auslaufleitung 8 und dessen anderer Fluidkanal in die Zuführleitung 5 eingeschaltet ist.

## Beschreibung

Die Erfindung betrifft Einrichtung zum Erwärmen von Wasser, umfassend einen Wasserbehälter zum Bevorraten des zu erwärmenden Wassers, eine Pumpe zum Fördern des zu erwärmenden Wassers über eine Zuführleitung, einen Durchlauferhitzer zum Erwärmen des geförderten Wassers und eine dem Durchlauferhitzer nachgeschaltete Auslaufleitung.

Derartige Wassererwärmungseinrichtungen kommen beispielsweise bei Heißgetränkezubereitungsmaschinen zum Einsatz. Mit einer solchen Wassererwärmungseinrichtung soll auf Umgebungstemperatur befindliches Wasser auf die für die Getränkebereitung benötigte Temperatur erwärmt werden. Zu diesem Zweck verfügt die Einrichtung über einen Wasserbehälter, in dem das zu erwärmende Wasser bevorratet ist. Eine an dem Ausgang des Wasserbehälters angeschlossene Pumpe fördert das zu erwärmende Wasser an einem Durchlauferhitzer, typischerweise einem so genannten Thermoblock, in dem das zugeführte Wasser erwärmt wird. Dem Durchlauferhitzer nachgeschaltet ist eine Auslaufleitung zum Wegführen des erwärmten Wassers an den eigentlichen Auslauf.

Um eine Gefahr von Verbrühungen zu vermeiden, wird das Wasser in dem Durchlauferhitzer nur soweit wie notwendig für die Aromagewinnung und -entfaltung eines zu bereitenden Getränks notwendig erwärmt. Dieses gilt insbesondere für solche Heißgetränkezubereitungsmaschinen, bei denen der Wassererwärmungseinrichtung keine anderen Aggregate nachgeschaltet sind, in bzw. an denen das erwärmte Wasser ohnehin vor der Ausgabe des Getränks abgekühlt wird, wie dieses beispielsweise bei einer Brüheinheit einer Kaffeemaschine der Fall ist. Wird bei einer solchen Heißgetränkezubereitungsmaschine lediglich eine Heißwasserausgabe gewünscht, wird dieses zwar erwärmt, jedoch nicht zum Sieden gebracht. Gleiches gilt bei Heißgetränkezubereitungsmaschinen, bei denen Getränke bereitet werden sollen und zur Aromagewinnung das benötigte erwärmte Wasser nicht kochend zugeführt werden soll, wie dieses beispielsweise bei einer Teebereitung gewünscht ist.

Eine Regelung der Ausgabetemperatur des erwärmten Wassers kann über die Bestromung des Durchlauferhitzers oder über die Fördergeschwindigkeit des durch den Durchlauferhitzer geförderten Wassers erfolgen. Von Nachteil ist allerdings, dass zumeist Wasser ausgegeben wird, welches beim Durchlaufen des Durchlauferhitzers nicht über 90°C erwärmt worden ist. In vielen Fällen wird es jedoch gewünscht, dass das ausgegebene Wasser zur Keimabtötung zumindest kurzzeitig auf eine Temperatur von mehr als 90°C erwärmt worden ist. Dieses ist beispielsweise für eine Bereitung von Babynahrungsmitteln gewünscht. Dieses gilt jedoch auch für Heißgetränkezubereitungsmaschinen, in deren Wasserbehälter das bevorratete Wasser mehrere Tage verbleibt. Daher wäre es auch für solche Heißgetränkezubereitungsmaschinen wünschenswert, das zur Heißgetränkebereitung verwendete Wasser, insbesondere zur Keimabtötung, beim Durchlaufen des Durchlauferhitzers zumindest kurzzeitig auf eine Temperatur von mehr als 90°C zu erwärmen. Wird die Wassererwärmungseinrichtung einer Heißgetränkezubereitungsmaschine jedoch in dieser Weise betrieben, ist zumindest für einige Anwendungen die Ausgabetemperatur des erwärmten Wassers zu hoch.

Ausgehend von diesem diskutierten Stand der Technik liegt der Erfindung daher die Aufgabe zugrunde, eine Wassererwärmungseinrichtung der eingangs genannten Art dergestalt weiterzubilden, dass die zu dem vordiskutierten Stand der Technik aufgezeigten Nachteile vermieden sind.

Gelöst wird diese Aufgabe erfindungsgemäß durch eine eingangs genannte, gattungsgemäße Wassererwärmungseinrichtung, bei der die Einrichtung einen Wärmeübertrager zum Kühlen des vom den Durchlauferhitzer erwärmten Wassers einerseits und zum Erwärmen des dem Durchlauferhitzer zugeführten Wassers andererseits aufweist, dessen einer Fluidkanal in die dem Durchlauferhitzer nachgeschaltete Auslaufleitung und dessen anderer Fluidkanal in die Zuführleitung eingeschaltet ist.

Diese Einrichtung zum Erwärmen von Wasser verfügt über eine Kühleinrichtung zum Kühlen des zuvor von dem Durchlauferhitzer erwärmten Wassers. Als Kühleinrichtung dient ein Wärmeübertrager, dessen einer Fluidkanal in die dem Durchlauferhitzer nachgeschaltete Auslaufleitung eingeschaltet ist. Der andere Fluidkanal des Wärmeübertragers ist in die Zuführleitung zum Zuführen des Wassers an den Durchlauferhitzer eingeschaltet. Bei einem Betrieb der Einrichtung wird somit das erwärmte Wasser beim Durchlaufen des Wärmeübertragers abgekühlt, wobei die abgegebene Wärme auf das andere Medium - das in der Zuführleitung geforderte Wasser - übertragen wird. Das in der Zuführleitung geförderte Wasser befindet sich auf Umgebungstemperatur oder ist gekühlt. Somit kann bei dieser Wassererwärmungseinrichtung das durch die Pumpe geförderte Wasser in dem Durchlauferhitzer auf Temperaturen von über 90°C erwärmt werden, wobei durch die nachfolgende Kühlstrecke sichergestellt ist, dass das ausgegebene erwärmte Wasser die gewünschte Ausgabetemperatur aufweist. Vorteilhaft ist zudem, dass das dem Durchlauferhitzer zugeführte Wasser durch diese Maßnahme bereits vorerwärmt ist und der Durchlauferhitzer somit grundsätzlich mit einer geringeren Leistung betrieben werden kann, verglichen mit derjenigen Leistung, die benötigt wäre, wenn das im Durchlauferhitzer zugeführte Wasser nicht vorgewärmt wäre. Im Zuge der Ansteuerung des Durchlauferhitzers kann zur Kompensation einer Erwärmung einer ersten Wassermenge der Durchlauferhitzer mit einer höheren Leistung betrieben werden, die dann heruntergeregelt werden kann, wenn das dem Durchlauferhitzer zugeführte Wasser - wie vorbeschrieben - vorerwärmt ist.

Als Wärmeübertrager kann letztendlich jedwede Bauform eingesetzt werden, die geeignet ist, Wärme von einem flüssigen Medium auf ein anderes flüssiges Medium zu übertragen. Über die Konzeption des Wärmeübertragers kann die von dem erwärmten Wasser an den im Durchlauferhitzer zugeführten Wasserstrom abzugebende Wärme eingestellt werden.

In einer Weiterbildung ist vorgesehen, dass die Wassererwärmungseinrichtung eine Kühl-Bypass-Leitung aufweist, mit der der von dem erwärmten Wasser durchströmbare Fluidkanal des Wärmeübertragers überbrückt wird. Zum Lenken des erwärmten Wassers in die eine oder in die andere Leitung dient ein Zwei-Wege-Ventil, welches zweckmäßigerweise zu seiner Ansteuerung an eine Prozessoreinheit angeschlossen ist. Bei dem Zwei-Wege-Ventil kann es sich auch um zwei wechselweise angesteuerte Auf-Zu-Ventile handeln, von denen eines in die dem Fluidkanal des Wärmeübertragers zuführende Leitung und das andere in die Kühl-Bypass-Leitung eingeschaltet ist. Somit sind unter dem im Rahmen dieser Ausführung benutzten Begriff "Zwei-Wege-Ventil" solche Ventile zu subsumieren, die unabhängig von ihrer Bauart zum Lenken des aus dem Durchlauferhitzer austretenden erwärmten Wassers in die eine oder die andere oder in Teilströmen auch in beide Leitungen geeignet sind. Bei Vorsehen von zwei Auf-Zu-Ventilen kann eine Teilstromlenkung durch getaktetes Ansteuern dieser Ventile erfolgen.

Vorzugsweise mündet die Kühl-Bypass-Leitung in den Auslauf des Fluidkanals, der von dem durch den Durchlauferhitzer erwärmten Wasser durchströmt wird. Somit sind beide Wegsamkeiten bei diesem Ausführungsbeispiel wieder zusammengeführt und führen in einen gemeinsamen Auslauf. Dieses ist grundsätzlich nicht notwendig, da durchaus auch Anwendungsfälle der Wassererwärmungseinrichtung gegeben sein könnten, bei der eine unterschiedliche Ausgabe des nach seiner Erwärmung durch den Wärmeübertrager geführten Wassers und eine direkt und ohne nachträgliche Abkühlung ausgegebenen Wasser gewünscht sein könnte. Sind die beiden unterschiedlichen Wegsamkeiten in eine gemeinsame Auslaufleitung zusammengefügt, kann in diese gemeinsame Auslaufleitung ein Temperatursensor eingeschaltet sein. Dieser Temperatursensor ist an eine Prozessoreinheit angeschlossen. In Abhängigkeit von der gewünschten Ausgabetemperatur kann sodann über das bzw. die Ventile die Führung des erwärmten Wassers so gelenkt werden, dass das Wasser am Auslauf die gewünschte vorher eingestellte Temperatur aufweist. Die bei einer solchen Ausgestaltung einstellbare Ausgabetemperatur ist maximal diejenige Temperatur, die das von dem Durchlauferhitzer erwärmte Wasser am Auslauf aufweist, wenn dieses nicht über den Wärmeübertrager geleitet wird. Die geringste Temperatur des ausgegebenen Wassers stellt sich ein, wenn das gesamte, von dem Durchlauferhitzer erwärmte Wasser über den Wärmeübertrager geleitet wird. Durch entsprechende Regelung des oder der Ventile kann durch Bereitstellen unterschiedlicher Teilströme zwischen den beiden vorbeschriebenen Endwerten jede Zwischentemperatur bereitgestellt werden.

Nachfolgend ist die Erfindung anhand von Ausführungsbeispielen unter Bezugnahme auf die beigefügten Figuren beschrieben. Es zeigen:
- Fig. 1:: eine schematisierte Darstellung nach Art eines Blockschaltbildes einer ersten Wassererwärmungseinrichtung und
- Fig. 2:: eine schematisierte Darstellung nach Art eines Blockschaltbildes einer Wassererwärmungseinrichtung gemäß einem weiteren Ausführungsbeispiel.

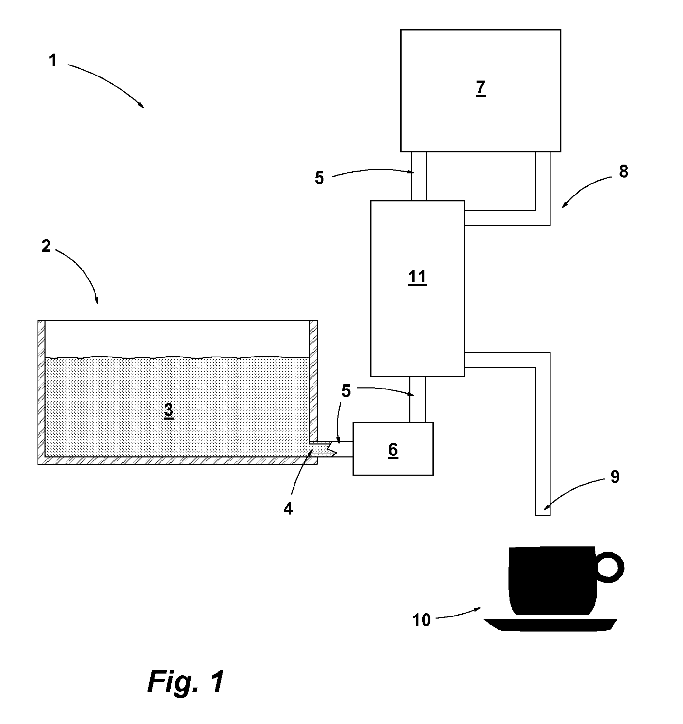

Eine Wassererwärmungseinrichtung 1 umfasst einen Wasserbehälter 2. Das in dem Wasserbehälter 2 enthaltene Wasser ist mit dem Bezugszeichen 3 gekennzeichnet. Der Wasserbehälter 2 verfügt über einen Ausfluss 4, durch den der Wasserbehälter 2 mit der insgesamt mit dem Bezugszeichen 5 gekennzeichneten Zuführleitung verbunden ist. In die Zuführleitung 5 ist dem Auslauf 4 des Wasserbehälters 2 nachgeschaltet eine Pumpe 6 angeordnet. Die Pumpe 6 dient zum Fördern des aus dem Wasserbehälter 2 entnommenen Wassers. Die Pumpe 6 fördert das von dem Wasserbehälter 2 entnommene Wasser 3 über die Zuführleitung 5 zu einem Durchlauferhitzer 7. Bei dem Durchlauferhitzer 7 handelt es sich um einen so genannten Thermoblock. Das den Durchlauferhitzer 7 durchströmende Wasser wird auf eine Temperatur von mehr als 90° gebracht. An den Ausgang des Durchlauferhitzers 7 schließt sich eine Auslaufleitung 8 an. Als Auslaufleitung ist im Rahmen dieser Ausführungen die gesamte Leitungsführung zu verstehen, die dem Durchlauferhitzer nachgeschaltet ist. Die Auslaufleitung 8 des dargestellten Ausführungsbeispiels weist an ihrem Ende einen Auslauf 9 auf, um das erwärmte Wasser beispielsweise in ein Trinkgefäß, wie durch die Tasse 10 in Figur 1 angedeutet, auszugeben.

Die Einrichtung 1 verfügt neben den vorbeschriebenen Elementen ferner über einen Wärmeübertrager 11. Der Wärmeübertrager 11 weist zwei Fluidkanäle auf. Einer der beiden Fluidkanäle ist in die Zuführleitung 5 eingeschaltet und bildet sodann einen Teil derselben. Der andere Fluidkanal ist in die Auslaufleitung 8 eingeschaltet und bildet somit einen Teil der Auslaufleitung 8. Der Wärmeübertrager 11 ist dergestalt ausgebildet, damit von dem in dem in die Auslaufleitung 8 eingeschalteten Fluidkanal geförderten Wassers Wärme an das in dem in die Zuführleitung 5 eingeschalteten Fluidkanal geförderte Wasser abgegeben wird. Das in der Auslaufleitung 8 strömende Wasser wird somit beim Betrieb der Einrichtung 1 und beim Durchströmen des Wärmeübertragers 11 gekühlt, während das in der Zuführleitung 5 dem Durchlauferhitzer 7 zugeführte Wasser entsprechend erwärmt wird. Das beim Durchlaufen des Durchlauferhitzers 7 auf eine Temperatur von über 90° erwärmte Wasser weist sodann am Auslauf 9 beispielsweise eine Temperatur von 60 bis 70° auf. Das an dem Auslauf 9 auslaufende erwärmte Wasser ist trotz seiner relativ geringen Temperatur unmittelbar vor dem Auslaufen auf eine Temperatur von über 90°C erwärmt und somit entkeimt worden. Dieses Wasser gilt sodann als abgekocht.

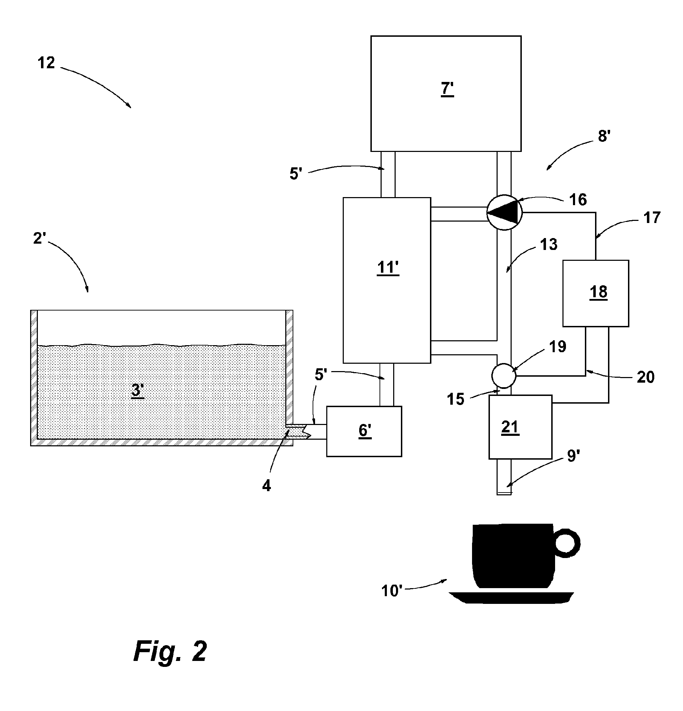

Figur 2 zeigt eine weitere Wassererwärmungseinrichtung 12, die prinzipiell aufgebaut ist wie die Wassererwärmungseinrichtung 1 der Figur 1. Aus diesem Grunde sind gleiche Elemente mit denselben Bezugszeichen gekennzeichnet, die jedoch bei der Wassererwärmungseinrichtung 12 um ein "Apostroph" ergänzt sind.

Die Wassererwärmungseinrichtung 12 unterscheidet sich hinsichtlich der Konzeption der Auslaufleitung 8' von derjenigen der Wassererwärmungseinrichtung 1. Die Wasserauslaufleitung 8' verfügt über eine Kühl-Bypass-Leitung 13 zum Überbrücken des in die Auslaufleitung 8' eingeschalteten Fluidkanals des Wärmeübertragers 11'. Der Auslauf 14 des in die Auslaufleitung 8' eingeschalteten Fluidkanals des Wärmeübertragers 11' mündet mit dem Ausgang der Kühl-Bypass-Leitung 13 zusammen, um anschlie-βend in einer gemeinsamen Leitung 15 dem Auslauf 9' zugeführt zu werden. In die Auslaufleitung 8' ist ein Zwei-Wege-Ventil 16 eingeschaltet, mit dem der aus dem Durchlauferhitzer 7' geförderte Warmwasserstrom entweder in den Fluidkanal des Wärmeübertragers 11' oder in die Kühl-Bypass-Leitung 13 gelenkt werden kann. Das Zwei-Wege-Ventil 16 ist ebenfalls in Zwischenstellungen schaltbar, sodass ein Teilstrom den in die Auslaufleitung 8' eingeschalteten Fluidkanal des Wärmeübertragers 11' und ein anderer Teilstrom die Kühl-Bypass-Leitung 13 durchströmen kann. Das Ventil 16 ist über eine Steuerleitung 17 an eine Prozessoreinheit 18 angeschlossen.

In die Leitung 15 ist ein Temperatursensor 19 eingeschaltet, der über eine Signalleitung 20 ebenfalls an die Prozessoreinheit 18 angeschlossen ist. Mit dem Temperatursensor 19 ist die Temperatur des die Leitung 15 durchströmenden Wassers messbar.

Dem Temperatursensor 19 ist bei dem in Figur 2 dargestellten Ausführungsbeispiel eine weitere Temperierstrecke 21 nachgeschaltet. Zum Temperieren der Temperierstrecke 21 dient ein Peltier-Element, welches ebenfalls an die Prozessoreinheit 18 angeschlossen ist. Somit ist durch die Prozessoreinheit 18 sowohl das Ventil 16 als auch das Peltier-Element der Temperierstrecke 21 ansteuerbar. Die Temperierstrecke 21 dient zum abschließenden Einstellen der Temperatur des durch den Auslauf 9' ausfließenden Wassers. Zu diesem Zweck kann die Temperierstrecke 21 als Kühlstrecke oder auch als Erwärmungsstrecke genutzt werden. Aus diesem Grunde wird als Temperierelement ein Peltier-Element eingesetzt, welches in Abhängigkeit von der Polung seiner Bestromung als Kühlelement oder als Wärmeelement eingesetzt werden kann. Da der Kühl- bzw. Wärmeleistung eines solchen Peltier-Elementes Grenzen gesetzt sind, erfolgt in der Temperierstrecke 21 eine Änderung der Temperatur des die Temperierstrecke 21 durchströmenden Wassers nur um wenige Grade.

Bei den dargestellten Ausführungsbeispielen sind die Pumpen und die Durchlauferhitzer ebenfalls an eine Prozessoreinheit angeschlossen, die die Steuerung der Einrichtungen übernimmt.

Bei einem Betrieb der Wassererwärmungseinrichtung 12 kann somit abgekochtes Wasser in unterschiedlichen Temperaturen ausgegeben werden. Das über den Auslauf 9' ausgegebene Wasser weist seine höchste Temperatur dann auf, wenn das aus dem Durchlauferhitzer 7' austretende Wasser insgesamt über die Kühl-Bypass-Leitung 13 geleitet wird. Seine geringste Ausgabetemperatur weist das Wasser dann auf, wenn das von dem Durchlauferhitzer 7' auf eine Temperatur von über 90° erwärmte Wasser vollständig durch den in die Auslaufleitung 8' eingeschalteten Fluidkanal des Wärmeübertragers 1' geleitet wird und die Temperiereinrichtung 21 zum weiteren Kühlen des auszugebenden Wassers angesteuert ist. Zwischen diesen beiden Endwerten lässt sich quasi jede Zwischentemperatur als Ausgabetemperatur einstellen. Dieses erfolgt durch die Regelkreise, gebildet durch den Temperatursensor 19 und das Ventil 16 einerseits und die Temperierstrecke 21 anderseits unter Zwischenschaltung der Prozessoreinheit 18.

In einem in den Figuren nicht dargestellten weiteren Ausführungsbeispiel ist vorgesehen, dass der Wasserbehälter eine Kühleinrichtung aufweist und somit das in dem Wasserbehälter bevorratete Wasser gekühlt ist. Dieses hat zum einen zum Vorteil, dass eine Keimbildung innerhalb des Wasserbehälters reduziert ist und dass die Kühlleistung in dem Wärmeübertrager aufgrund des geringeren Temperaturniveaus des durch die Pumpe in die Zuführleitung geförderten Wasser verbessert ist. Als Kühlelement für eine solche Kühleinrichtung können ein oder mehrere Peltier-Elemente dienen.

Anstelle einer dem Wasserbehälter zugeordneten Kühleinrichtung kann ebenfalls vorgesehen sein, den Wasserbehälter insgesamt in einem Kühlschrank anzuordnen, wobei die gesamte Wassererwärmungseinrichtung Teil des Kühlschrankes sein kann. Eine solche Ausgestaltung kann als Erweiterung solcher Kühlschränke vorgesehen sein, die bereits über eine Kaltwasserausgabe und/oder eine Eisausgabe verfügen.

### Bezugszeichenliste

- 1: Wassererwärmungseinrichtung
- 2, 2': Wasserbehälter
- 3, 3': Wasser
- 4, 4': Auslauf
- 5, 5': Zuführleitung
- 6, 6': Pumpe
- 7, 7': Durchlauferhitzer
- 8, 8': Auslaufleitung
- 9, 9': Auslauf
- 10, 10': Tasse
- 11, 11': Wärmeübertrager
- 12: Wassererwärmungseinrichtung
- 13: Kühl-Bypass-Leitung
- 14: Auslauf
- 15: Leitung
- 16: Zwei-Wege-Ventil
- 17: Steuerleitung
- 18: Prozessoreinheit
- 19: Temperatursensor
- 20: Signalleitung
- 21: Temperierstrecke

## Patentansprüche

1. Einrichtung zum Erwärmen von Wasser, umfassend einen Wasserbehälter (2, 2') zum Bevorraten des zu erwärmenden Wassers (3, 3'), eine Pumpe (6, 6') zum Fördern des zu erwärmenden Wassers über eine Zuführleitung (5, 5'), einen Durchlauferhitzer (7, 7') zum Erwärmen des geförderten Wassers und eine dem Durchlauferhitzer (7, 7') nachgeschaltete Auslaufleitung (8, 8'), **dadurch gekennzeichnet, dass** die Einrichtung (1, 12) einen Wärmeübertrager (11, 11') zum Kühlen des vom den Durchlauferhitzer (7, 7') erwärmten Wassers einerseits und zum Erwärmen des dem Durchlauferhitzer (7, 7') zugeführten Wassers andererseits aufweist, dessen einer Fluidkanal in die dem Durchlauferhitzer (7, 7') nachgeschaltete Auslaufleitung (8, 8') und dessen anderer Fluidkanal in die Zuführleitung (5, 5') eingeschaltet ist.

2. Einrichtung nach Anspruch 1, **dadurch gekennzeichnet, dass** der eine Fluidkanal des Wärmeübertragers (11, 11') in der Zuführleitung (5, 5') der Pumpe (6, 6') zum Fördern des zu erwärmenden Wassers nachgeschaltet ist.

3. Einrichtung nach Anspruch 1 oder 2, **dadurch gekennzeichnet, dass** die Einrichtung (12) über eine Kühl-Bypass-Leitung (13) und ein Zwei-Wege-Ventil (16) verfügt, mit welchem Ventil (16) das von dem Durchlauferhitzer (7') erwärmte Wasser entweder zum Kühlen desselben in den einen Fluidkanal des Wärmeübertragers (11') oder in die Kühl-Bypass-Leitung geleitet wird.

4. Einrichtung nach Anspruch 3, **dadurch gekennzeichnet, dass** das Ventil (16) auch in eine Stellung schaltbar ist, dass das in der Auslaufleitung (8') strömende Wasser in einen den einen Fluidkanal des Wärmeübertragers (11') durchströmenden Teilstrom und in einen die Kühl-Bypass-Leitung (13') durchströmenden Teilstrom geteilt wird.

5. Einrichtung nach Anspruch 3 oder 4, **dadurch gekennzeichnet, dass** die Kühl-Bypass-Leitung (13) in den Auslauf (14) des von dem erwärmten Wasser durchströmten Fluidkanals des Wärmeübertragers (11') mündet.

6. Einrichtung nach Anspruch 5, **dadurch gekennzeichnet, dass** der Mündung der Kühl-Bypass-Leitung (13) in den Auslauf (14) des von dem erwärmten Wassers durchströmten Fluidkanals nachgeschaltet ein an eine Prozessoreinheit (18) angeschlossener Temperatursensor (19) eingeschaltet ist, an welche Prozessoreinheit (18) ebenfalls das Ventil (16) zum Steuern desselben angeschlossen ist.

7. Einrichtung nach Anspruch 5 oder 6, **dadurch gekennzeichnet, dass** der Mündung der Kühl-Bypass-Leitung (13) in den Auslauf (14) des von dem erwärmten Wassers durchströmten Fluidkanals nachgeschaltet eine Temperierstrecke (21) vorgesehen ist.

8. Einrichtung nach einem der Ansprüche 1 bis 7, **dadurch gekennzeichnet, dass** der Wasserbehälter eine Kühleinrichtung aufweist.

9. Einrichtung nach Anspruch 8, **dadurch gekennzeichnet, dass** die Kühleinrichtung ein oder mehrere Peltier-Elemente umfasst.

10. Einrichtung nach einem der Ansprüche 1 bis 9, **dadurch gekennzeichnet, dass** die Einrichtung Teil einer Heißgetränkezubereitungsmaschine, etwa einer Kaffeemaschine ist.
